Europäisches Patentamt

(19) European Patent Office

Office européen des brevets

(11) Publication number: **0 201 218**
A1

(12) **EUROPEAN PATENT APPLICATION**

(21) Application number: **86302706.6**

(22) Date of filing: **11.04.86**

(51) Int. Cl.⁴: **B 60 T 17/02,** F 04 B 49/02

(30) Priority: **09.05.85 GB 8511778**

(43) Date of publication of application: **12.11.86**
**Bulletin 86/46**

(84) Designated Contracting States: **DE FR GB IT**

(71) Applicant: **LUCAS INDUSTRIES public limited company,
Great King Street, Birmingham, B19 2XF West Midlands
(GB)**

(72) Inventor: **McCann, Denis John, 10, Derwen Fawr
Crickhowell, Powys Wales (GB)**

(74) Representative: **Waite, Anthony William et al, Marks &
Clerk Alpha Tower Suffolk Street Queensway,
Birmingham B1 1TT (GB)**

(54) **Governor valve.**

㊷ A governor valve as a valve body (1) and a valve member (9)
mounted within the body by way of a flexible support portion (11)
permitting movement of the valve member between first and
second stable conditions in which it respectively engages one or
other of a pair of seats (4A, 5B) in order to block flow through a
respective associated port (3, 5). The seats define different areas
of opposed surfaces respectively of the valve member when
engaged thereby and the valve member is spring urged towards
the smaller area seat. Application of sufficient pressure to the
smaller area of the valve member causes the latter to move from
the seat, allowing pressure to be applied over the whole adjacent
surface of the valve member to move it rapidly into engagement
with the other seat. Return to the first seat is effected in similar
manner.

## GOVERNOR VALVE.

This invention relates to a governor valve for use in controlling pneumatic systems and particularly vehicle air actuated braking systems in which a compressor charges a reservoir from which actuating pressure is supplied to one or more actuators.

In some such braking systems, operation of the compressor is controlled by a clutch mechanism operating under the control of the governor valve in response to a pressure derived from the compressor output to interrupt drive to the compressor when compression is no longer required. With such an arrangement, it can be desirable for the response time of the governor valve to be as short as possible in order to minimise the clutch engagement and release times. Satisfactory response times are achievable by the use of a bi-stable valve, a characteristic of which is that it cannot modulate between its two stable states.

One prior proposal for a bi-stable governor valve relies upon a ball movable along a bore and acting as a valve element controlling air flow between valve ports. In order to obtain efficient operation from a valve of this kind, however, the clearance between the bore and the ball needs to be small e.g. about 0.08 mm. on diameter. Not only does this small clearance seriously limit the air flow through the valve, but the ball can easily be jammed by even fine contaminants lodging in the bore. Moreover, the bore requires accurate manufacture which contributes significantly to manufacturing costs.

An object of the invention is to provide a bi-stable governor valve in which the aforesaid drawbacks are eliminated or avoided.

According to the present invention, a governor valve comprises a valve body containing valve ports through which the flow of fluid is to be controlled, a valve member mounted within the valve body by way of a flexible support portion thereof which permits the valve member to move, under the influence of pressure applied to either of two surfaces thereof, between first and second stable positions in which it respectively engages one or the other of a pair of seats and thereby blocks flow through an associated one of said ports, the seats defining different areas of the valve member when engaged thereby such that movement of the valve member away from one of said seats by pressure applied via the associated port to the area of the valve member defined by said one seat permits pressure to be applied additionally to the adjacent one of said surfaces causing the valve member to move rapidly into the other stable position.

In one convenient practical arrangement, the valve member comprises an inner rigid portion providing seat parts, preferably of part spherical form, for engagement with said seats, and a surrounding flexible portion, preferably in the form of a diaphragm, forming said flexible support portion mounting the valve member within the body.

Preferably, the valve member is urged, conveniently by spring means, towards the seat of smaller area.

A passage may conveniently be provided through the valve member permitting application of pressure to both of said surfaces simultaneously.

The invention will now be described, by way of example, with reference to the accompanying drawings in which:-

Figure 1 is a cross-sectional view of one form of the governor valve of the invention in a first mode of operation;

Figure 2 shows the valve of Figure 1 in a second mode of operation;

Figure 3 illustrates diagrammatically one form of air pressure system incorporating the governor valve of Figures 1 and 2;

Figures 4 and 5 are graphs respectively illustrating response times of the governor valve in operation;

Figure 6 is a scrap cross-sectional view showing a modification to one of the components of the valve of Figures 1 and 2;

Figure 7 illustrates an alternative embodiment of the governor valve of the invention;

Figure 8 is a cross-sectional view of the governor valve of Figure 1 in association with an unloader valve, and

Figure 9 illustrates a pneumatic circuit incorporating the assembly of Figure 8.

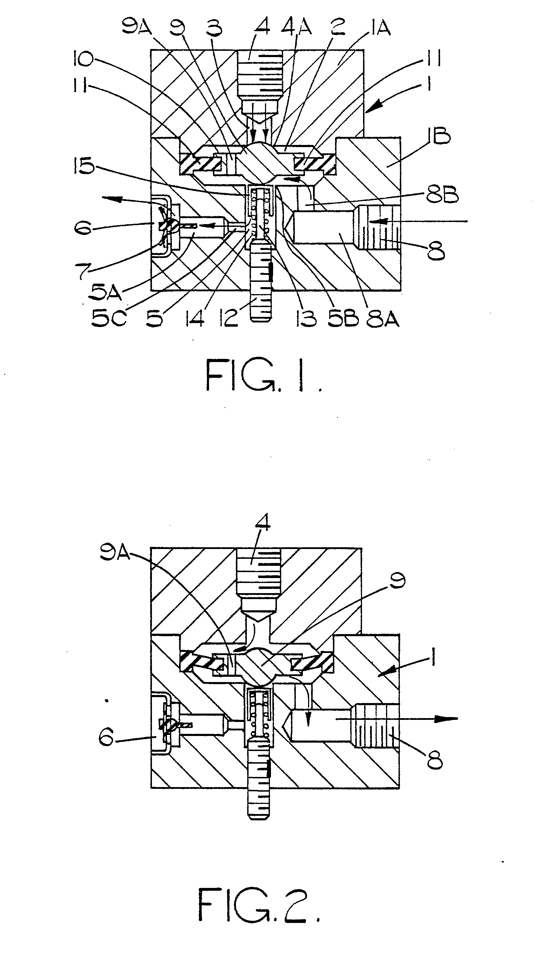

Referring to Figure 1, the governor valve shown therein includes a valve body indicated generally at 1 which consists of two parts 1A, 1B retained in assembled relationship by suitable means such as bolts (not shown). The valve body defines a valve chamber, indicated generally at 2, from which a passage 3 formed in the body part 1A extends into communication with a port 4 also formed in that body part. A seat 4A surrounds the entrance to the passage 3 adjacent the chamber 2. A further passage 5 formed in the body part 1B extends from the chamber 2 and communicates via a branch 5A with an exhaust port 6, flow through which is controlled by means of a flap valve 7 which is shown alternatively in a displaced position in which it permits flow through the port 6 and in a rest position in which it precludes ingress of foreign material through the port. A seat 5B surrounds the entrance to the passage 5 adjacent the chamber 2. A further port 8 in the body part 1B is in permanent communication with the chamber 2 via passages 8A and 8B also formed in the body part 1B.

A valve member is disposed within the valve chamber 2 and includes a part-spherical central portion 9 surrounded by a peripheral radial flange 10, to which is attached or with which is integrally formed a diaphragm 11 by means of which the valve member is supported within the chamber. The diaphragm 11 is preferably of rubber or other resilient material, and the outer peripheral portion thereof is trapped between the valve body parts 1A, 1B. Communication between opposed sides of the valve member is afforded by a hole 9A formed in the flange 10. A screw 12 is threadedly engaged in a bore in the body in alignment with the passage 5, the screw having a spigot 13 surrounded by a spring 14 which acts upon the valve member 9 via a cap 15 to urge the valve member into the position shown in which it engages the seat 4A to close the port 4. The position of the screw within its bore governs the compressive force of the spring. The passage 3 is of smaller cross-section than the passage 5 so that the valve seats 4A, 5A define correspondingly

0201218

different areas of the valve member. This is an important feature in the operation of the valve, as will be explained hereinafter.

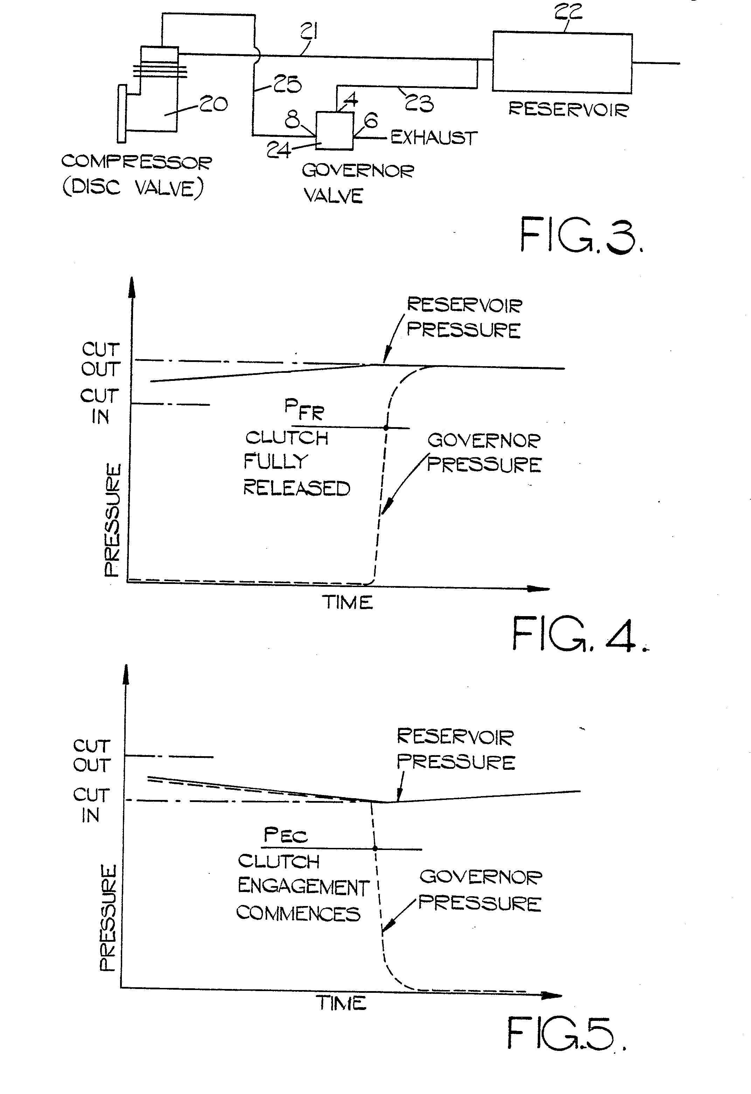

A typical pneumatic circuit in which the governor valve of Figures 1 and 2 might be used is illustrated diagrammatically in Figure 3, being of the kind widely used in vehicle pneumatic braking systems. The system includes a clutch driven compressor 20, the output of which is supplied via a line 21 to a reservoir 22 in order to charge the latter to a predetermined pressure. A branch line 23 subject to the reservoir pressure is connected to a governor valve 24 of the invention, the latter being connected via a line 25 to a piston (not shown) controlling the operation of the compressor clutch. Relating Figure 3 to Figure 1, the line 23 connects to the governor valve at the port 4 and the line 25 connects to the governor valve at the port 8. The exhaust port 6 of the governor valve is also indicated.

The operation of the governor valve of Figures 1 and 2 will now be described in relation to the pneumatic system of Figure 3 in which the compressor is continuously driven, as for example from a vehicle engine. The compressor clutch is controlled from the reservoir pressure to interrupt drive to the compressor when the reservoir pressure reaches a value outside a given pressure range defined by a "cut out" or maximum pressure and a "cut in" or minimum pressure.

Figure 1 shows the governor valve in one of its operative conditions which is assumed when the reservoir pressure is less than the cut out pressure. This condition of the valve permits the compressor clutch to engage, enabling the compressor to charge the

0201218

reservoir via line 21. It will be seen from Figure 1 that port 4 is closed off by the valve member 9 and the port 8 communicates via passages 8A, 8B, 5 and 5A with the exhaust port 6 so that any possibility of the clutch being disengaged at this stage is precluded. The valve will remain in its condition as illustrated until the reservoir is charged to the extent that the pressure therein equals the cut out pressure. The force of the spring 14 is chosen such that when this condition is reached, the reservoir pressure acting on the valve member 9 over the area defined by the seat 4A is sufficient to cause a slight deflection of the spring, thereby moving the valve member off the seat. When this occurs, air pressure is able to act over the whole of the upper area of the valve member, causing a sudden increase in force which overcomes the spring 14, the valve member then being urged downwardly on to the seat 5B, as shown in Figure 2. Air is able to flow through the hole 9A, and reservoir pressure is thus applied to both sides of the valve member 9, but since the seat 5B is larger than the seat 4A, the upper area of the valve member will now effectively be the greater and the reservoir pressure acting on this area is sufficient to overcome the increased force of the now compressed spring 14 to hold the valve member against the seat 5B. Air from the reservoir is now able to flow from the port 4 through the hole 9A and passages 8A and 8B into the compressor port 8, whence it is applied to a clutch control piston (not shown) to disengage the clutch and thereby interrupt drive to the compressor.

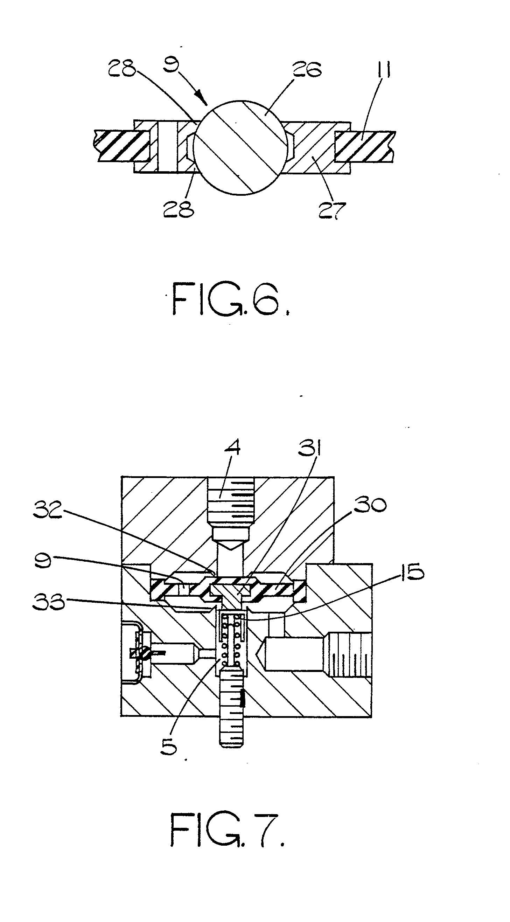

As can be seen from Figure 4, the rise in pressure through the governor valve is almost instantaneous from substantially zero up to reservoir pressure, which means that interruption of drive to the compressor

0201218

occurs extremely rapidly once the reservoir pressure reaches the cut out value.

As the vehicle braking system is used, the reservoir pressure will fall and eventually equal the cut in pressure at which further charging is required. When this occurs, the pressure through port 4 is no longer sufficient to hold the valve member 9 against the opposing force of the spring 14 and the valve member lifts slightly from the seat 5B. Air pressure then acts on the underside of the valve member and thus reinforces the action of the spring 14 in urging the valve member to move rapidly back against the seat 4A. A restriction 5C is provided between the passages 5 and 5A to ensure that pressure is maintained beneath the valve member for a sufficient length of time to ensure that it engages the seat at the port 4. Air pressure existing at the upper side of the valve member and diaphragm decays via the hole 9, passage 5, restriction 5B and port 6 to atmosphere. This process happens very rapidly, as indicated by Figure 5, the pressure through the governor falling almost instantaneously to a value which is substantially zero, thereby permitting very rapid clutch re-engagement for the recommencement of charging.

In the embodiment of Figure 1, the valve member 9 is a single component suspended by means of the diaphragm 11. Figure 6 illustrates an alternative form of valve member 9 in which a hardened steel ball 26 is carried by means of a support member 27, as of plastics material for example, the ball being snap-engaged between a pair of internal peripheral ribs 28 of the support member in order to retain the ball in position. The ribs also form an effective seal around the ball. The valve member 9 is carried by a flexible diaphragm 11, as before.

In a further alternative construction illustrated in Figure 7, the valve member consists of a diaphragm 30 which surrounds and is bonded to a relatively hard insert 31, the lower end of which is exposed and engaged by the spring urged cap 15. In this embodiment, the valve seats are formed by relatively sharp. formations 32, 33 respectively surrounding the entrance to the port 4 and passage 5, the passage 9 being provided in the diaphragm itself. The remaining details of construction and operation of the governor valve are identical with those described in relation to Figure 1.

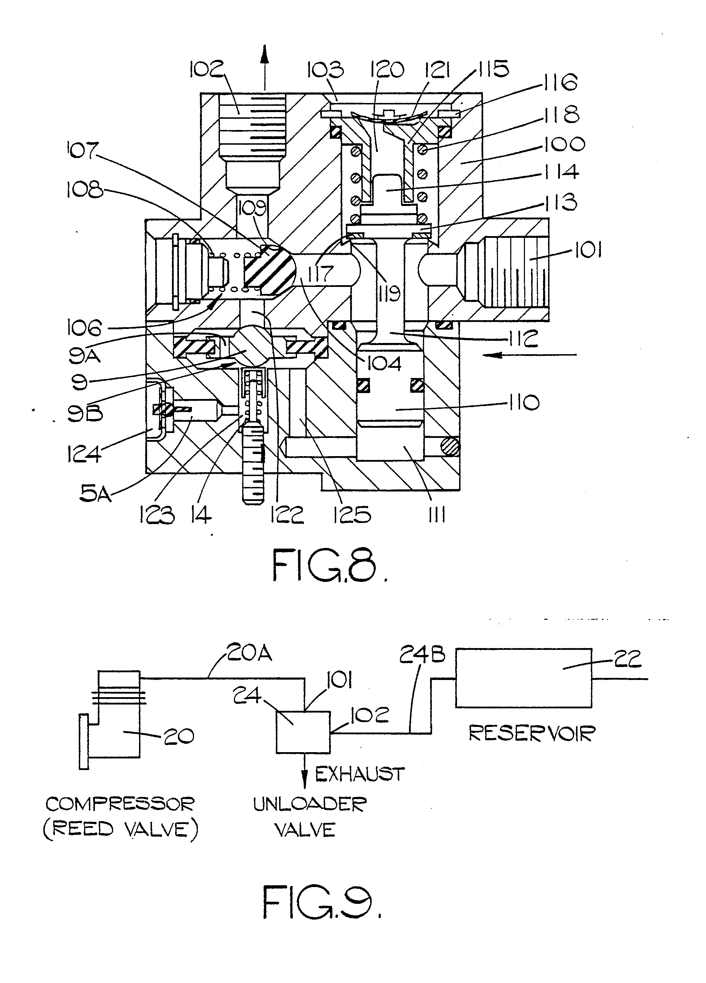

Figure 8 illustrates the governor valve of the invention as part of an unloader valve assembly of which the primary function would be to prevent the overcharging of a reservoir fed from a compressor. A typical reservoir charging circuit is illustrated in Figure 9 and includes a compressor 20 connected by a line 20A to a governor valve 24 from which a further line 24B leads to a reservoir 22. Relating Figure 9 to Figure 8, the line 20A connects the compressor to the port 101 of the governor valve, and the line 24B connects the reservoir to the port 102 of the valve. The exhaust port 124 of. the valve is also indicated.

A body 100 of the assembly has a pressure inlet 101 for connection to a compressor, and a pressure outlet 102 for connection to a reservoir, and a main exhaust port 103. The inlet port 101 communicates via a passage 104 with a one-way valve 106 which includes a valve element 107 urged by a spring 108 against a seating 109 of the housing, the valve, when in the condition illustrated, interrupting communication between the inlet and outlet ports. Flow through the exhaust port is controlled, in conventional manner, by a valve assembly comprising a piston 110 slidable in a bore 111 of the housing and being connected by a stem 112 to a valve head 113. The valve head is guided by a co-axial spigot 114 within a valve member 115 retained within the housing by a circlip 116. The valve head has a relatively soft seat area 117, as of rubber for example, and the head is urged, by a spring 118 acting between it and the valve member, towards a position in which the seat engages a corresponding seat 119 formed as a relatively sharp rim around the bore 111. The valve member itself has an exhaust passage 120 therethrough which is normally closed by a flap valve 121.

The governor valve is of the type illustrated in Figure 1, the valve member 9 thereof being disposed in a chamber 9B between a passage 122 leading to the reservoir port 102 and a further passage 123 leading to an exhaust port 124. A hole 9A through the valve member provides communication between portions of the chamber 9B lying respectively above and below the valve member. A passage 125 connects the lower portion of the chamber 9B to the bore 111 at the opposite side of the piston 110 to the shank 112.

The function of the unloader valve is to prevent overcharging of the reservoir by the compressor, whilst also acting to prevent significant escape of pressure from the reservoir, the valve operating in the following manner.

When pressure is supplied from the compressor to the inlet 101, the one-way valve 107 is moved away from its seat, permitting charging of the reservoir to commence through port 102. The respective areas of the piston 110 and valve head 113 are arranged to be the equal, so that no differential pressure results and no movement of the piston and valve head takes place as a result of the inlet pressure applied thereto. Moreover, the valve member 9 of the governor valve is, at this stage held by the spring 14 against the seating around the passage 122 so that the chamber 9B is isolated from the reservoir pressure.

At a certain predetermined pressure, depending principally upon the strength of the spring 14 and area defined by the port seating around passage 122, the valve member 9 is moved away from the port, resulting in reservoir pressure being applied to the whole of the upper area of the valve member, causing the latter to snap to its other position in which it closes the passage 123 by engaging the seating formed by the adjacent end of that passage.

Pressure is applied to both sides of the valve member because of the presence of the hole 9A and differential pressure on the diaphragm holds it in this lower position in the manner described relative to Figure 1. Reservoir pressure is now applied to the piston 110 in opposition to the spring 118, causing the valve head to be lifted off the seat 119 and thereby connecting the inlet port 101 to atmosphere via the passage 120.

Usage of reservoir pressure will eventually cause the pressure therein to drop to a value such that further charging is required. At this value, insufficient force is generated on the upper side of the valve member 9 to overcome the force of the spring 14 and the valve member once again snaps into its other stable position in which it blocks off the passage 122. Pressure can then decay from the bore 111 through passages 125, 123, 5A and exhaust port 124, enabling the spring 118 to re-engage the valve head 113 against its seat 119. Charging the reservoir can then recommence and the cycle will repeat as often as is required.

It will be seen that the governor valve of the invention is of simple and inexpensive construction and operates satisfactorily in a bi-stable manner whilst permitting improved air flow therethrough than some conventional valves. Moreover, since the clearances around the valve member and within its associated passages are relatively large, the valve of the invention is significantly less susceptible to jamming of the valve member than the aforesaid conventional valves.

-12-

0201218

CLAIMS.

1.   A governor valve comprising a valve body containing valve ports through which the flow of fluid is to be controlled, a valve member mounted within the valve body by way of a flexible support portion thereof which permits the valve member to move, under the influence of pressure applied to either of two surfaces thereof, between first and second stable positions in which it respectively engages one or the other of a pair of seats and thereby blocks flow through an associated one of said ports, the seats defining different areas of the valve member when engaged thereby such that movement of the valve member away from one of said seats by pressure applied via the associated port to the area of the valve member defined by said one seat permits pressure to be applied additionally to the adjacent one of said surfaces causing the valve member to move rapidly into the other stable position.

2.   A valve according to Claim 1 wherein the valve member includes an inner rigid portion providing seat parts for engagement with said seats, said flexible portion surrounding the rigid portion and serving to mount the valve member within the body.

3.   A valve according to Claim 2 wherein said seat parts are of part-spherical form.

4.   A valve according to Claim 2 or Claim 3 wherein said outer flexible support portion is in the form of an annular diaphragm secured at its inner periphery to the rigid portion and at its outer periphery to the valve body.

0201218

5.    A valve according to any one of the preceding claims wherein the flexible support portion forms part of each of said surfaces.

6.    A valve according to any one of Claims 2 to 5 wherein said rigid portion includes an annular part, to the outer periphery of which is secured said flexible portion, the inner periphery supporting a separate element providing opposed spherical valve surfaces.

7.    A valve according to Claim 6 wherein said separate element is spherical.

8.    A valve according to Claim 1 wherein the valve member includes an internal rigid core carrying said flexible support portion which covers opposed surface portions of the core, said seats engaging said support portion alternatively at areas thereof covering said core in order to close the respective valve ports.

9.    A valve according to any one of the preceding claims wherein a passage is formed through the valve member permitting application of pressure to both of said two surfaces simultaneously.

10.    A valve according to any one of the preceding claims wherein the valve member is urged towards the seat of smaller area.

11.    A valve according to any one of the preceding claims wherein the valve member is disposed within a chamber of the valve body, said seats being provided in opposed walls of said chamber, the larger area seat forming the entrance to a bore containing a spring urging the valve member towards the smaller area seat.

-14-

0201218

12. A governor valve substantially as hereinbefore described with reference to Figures 1 and 2, or Figures 1 and 2 as modified by Figure 6, or as described in Figure 7 of the accompanying drawings.

13. A pneumatic system incorporating a governor valve according to any one of Claims 1 to 12.

14. An unloader valve incorporating a governor valve according to any one of Claims 1 to 12, wherein the governor valve is arranged between a compressor inlet port and a reservoir port of the unloader valve, such that in one of its stable positions it isolates the reservoir port from a piston controlling a compressor exhaust port, and in its other stable position places the reservoir port in communication with said piston which moves to open said exhaust port and place said compressor inlet port in communication with atmosphere.

15. An unloader valve substantially as hereinbefore described with reference to Figure 8 of the accompanying drawings.

FIG. 1.

FIG. 2.

COMPRESSOR (DISC VALVE)

GOVERNOR VALVE

RESERVOIR

EXHAUST

FIG.3.

PRESSURE

CUT OUT

CUT IN

RESERVOIR PRESSURE

$P_{FR}$
CLUTCH FULLY RELEASED

GOVERNOR PRESSURE

TIME

FIG.4.

PRESSURE

CUT OUT

CUT IN

RESERVOIR PRESSURE

$P_{EC}$
CLUTCH ENGAGEMENT COMMENCES

GOVERNOR PRESSURE

TIME

FIG.5.

FIG.6.

FIG.7.

FIG.8.

COMPRESSOR
(REED VALVE)

UNLOADER
VALVE

EXHAUST

RESERVOIR

FIG.9.

## EUROPEAN SEARCH REPORT

European Patent Office

# DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | US-A-2 729 225 (SAFFORD) <br><br> * Column 1, line 62 - column 3, line 15; figure 1 * | 1,2,4, 5,10, 11 | B 60 T 17/02 <br> F 04 B 49/02 |
| A | | 9 | |
| X | US-A-2 804 878 (FISHWOOD) <br><br> * Column 3, line 32 - column 4, line 15; figure 2 * | 1,2,4, 5,10, 11,13 | |
| A | | 9,14 | |
| A | DE-C- 851 392 (BENDIX-WESTINGHOUSE) | | **TECHNICAL FIELDS SEARCHED (Int. Cl.4)** <br><br> B 60 T 17/02 <br> B 60 T 15/36 <br> F 04 B 49/02 <br> F 15 B 1/02 <br> F 16 K 11/02 |
| A | GB-A-1 090 169 (DELTROL) | | |

The present search report has been drawn up for all claims

| Place of search | Date of completion of the search | Examiner |
|---|---|---|
| THE HAGUE | 30-07-1986 | HARTEVELD C.D.H. |